(19) Europäisches Patentamt
European Patent Office
Office européen des brevets

(11) EP 0 443 181 B1

(12) EUROPEAN PATENT SPECIFICATION

(45) Date of publication and mention
of the grant of the patent:
14.05.1997 Bulletin 1997/20

(51) Int Cl.⁶: **F16K 1/22**, F02D 9/10

(21) Application number: 90125019.1

(22) Date of filing: 20.12.1990

(54) **Butterfly valve**

Drehklappenventil

Soupape papillon

(84) Designated Contracting States:
**DE FR GB**

(30) Priority: 25.12.1989 JP 335613/89
12.03.1990 JP 60181/90

(43) Date of publication of application:
28.08.1991 Bulletin 1991/35

(73) Proprietor: **MATSUSHITA ELECTRIC INDUSTRIAL CO., LTD.**
**Kadoma-shi, Osaka-fu 571 (JP)**

(72) Inventors:
• **Maruyama, Teruo**
**Hirakata-shi, Osaka-fu (JP)**

• **Tanaka, Takashi**
**Yokohama-shi, Kanagawa-ken (JP)**
• **Kondo, Yasuhiro**
**Hirakata-shi, Osaka-fu (JP)**

(74) Representative: **Eisenführ, Speiser & Partner**
**Martinistrasse 24**
**28195 Bremen (DE)**

(56) References cited:
GB-A- 1 423 335      US-A- 2 010 694
US-A- 2 095 263      US-A- 3 516 640
US-A- 3 677 297      US-A- 3 960 177
US-A- 4 275 867

## Description

## BACKGROUND OF THE INVENTION

The present invention relates to a rotary valve according to the preamble of claim 1.

Conventionally, a rotary valve is utilized as the air feeding throttle valve of the automobile engine because it has a simple construction and adjusts flow rate easily. The throttle valve is mechanically interlocked with an accelerator stepped by a driver. That is, the force generated by the driver's stepping of the accelerator is directly transmitted to the valve. The force necessary for operating the valve is much smaller than the force required for the driver to step the accelerator. Therefore, there is no difficulty in operating the valve.

But recently, a system having each unit integrated with each other is adopted in an automobile. As such, electronic control technology has been introduced into the inhaling system of an engine in this trend. That is, instead of the conventional mechanism of mechanically connecting the accelerator and the valve with each other, both are disconnected from each other and the opening degree of the valve is optimally controlled according to the driver's intention and the travel condition of the automobile in order to make the driver feel comfortable. The characteristic of the valve to be controlled by the accelerator gives a great influence on the entire performance of the control system of the automobile. As such, the improvement of the valve has become a big problem.

Proposals for improving the flow rate characteristic of the throttle valve have been made, for example, in Japanese Laid-Open Patent Publication No. 56-146029 which pertains to a fine adjustment of an engine output. The improvement disclosed in the above publication facilitates a fine adjustment of the flow rate of the valve at a small angle of rotation thereof, however, it is difficult for the art to allow the entire control system including the valve to have a high performance.

The inventors aim to improve the torque to be applied to the valve. In order to achieve the aim, they tried to allow the valve which is driven by a servo motor and the entire control system thereof to have a high performance and be miniaturized. Many people have reported their theoretical and experimental investigations regarding the characteristic of the throttle valve (generally called butterfly valve).

Mr. M. J. Morris. et al. made a series of experiments to analyze unbalanced aerodynamic torque applied to the valve in their thesis "Peak torque characteristics of butterfly valves, American Society of Mechanical Engineers FED Vol. 54, P63 - 66, 1987". They measured static pressure applied to a valve disk and found the torque characteristic that torque increases to a maximum at a certain intermediate valve disk angle.

Mr. Kato et al. analyzed the characteristic of torque applied to the valve utilizing a computer simulation. In their report "On the numerical analysis of characteristics for two dimensional model of butterfly valves" (Research Report No. 55, 1983, Kogakuin University), they performed numerical calculations solving a simultaneous equation consisting of the equation of Navie-Storks and an equation of continuity in an aerodynamic flow. They found flow condition, flow speed, and pressure distribution to make an analysis including the torque characteristic of a valve.

However, all of the above studies relate to solutions of the aerodynamic flow in the vicinity of the valve and developments of techniques for solving the aerodynamic flow on the basis of a known fact that a peak torque is applied to the valve at a certain valve disk angle.

A desirable flow rate can be obtained by the butterfly valve when it is positioned at a predetermined angle in a flow with high speed and accuracy. If a great torque (unbalanced torque) is applied by fluid resistance to the valve which imposes a load on the motor and if the torque is greatly dependent on the valve disk angle, a great torque is a big obstacle in achieving a stabilized control system.

Apparatuses of an automobile are required to be compact and simple in construction due to its limited space and power supply. Therefore, it is difficult for a compact electric motor having a limited power to rotate the valve disk with a high response and accuracy against a big unbalanced torque applied to the valve.

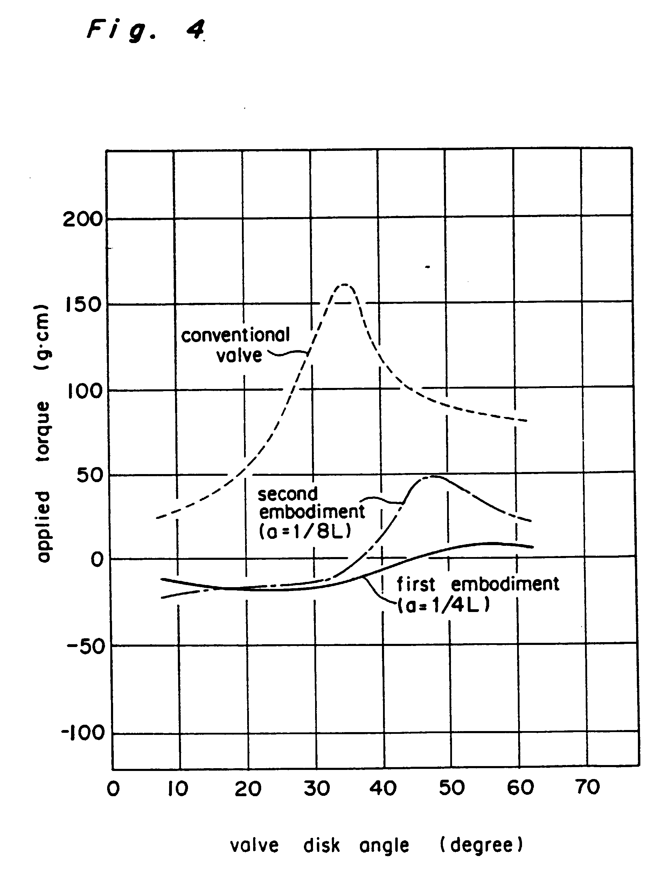

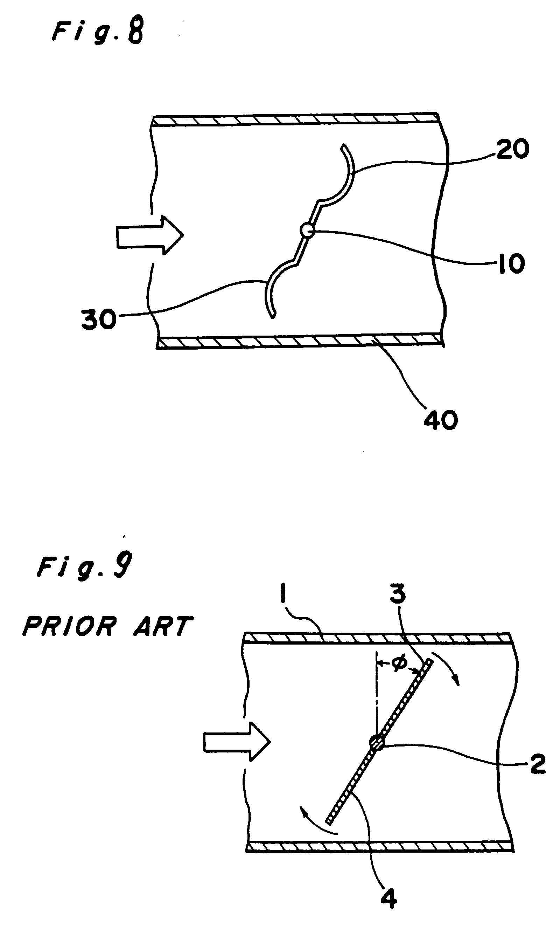

Fig. 9 shows the construction of a conventional rotary valve comprising a valve shaft 2 rotatably mounted at a certain position of a flow passage 1 and flat airfoils 3 and 4 mounted on either side of the shaft 2. The arrow at the left end shows the flow direction. When the passage 1 is closed with the flat airfoils 3 and 4 perpendicular to the flow direction, the flow is interrupted. When the airfoils 3 and 4 rotate clockwise, the valve is opened. The analysis of the flow in the vicinity of the conventional valve of the above construction has been conducted. The condition under which the analysis has been made is described later. The relationship between the valve disk angle $\phi$ and torque T is shown by the chain line of Fig. 4. As shown by the graph, torque T has a peak value when the angle $\phi$ which the airfoils 3 and 4 make with the vertical line is in the vicinity of 35°.

In order to drive the rotary valve by a motor, it is necessary to provide an equipment, for example, an automobile with a motor having a capacity much greater than the maximum value of torque T. In addition, the control circuit for driving the motor consumes much energy, which leads to the increase of cost.

The problem that the rotary valve is subjected to a big torque due to fluid resistance occurs not only in the air feed throttle valve for use in an automobile, but also in an electric actuator-driven butterfly valve for use in plants.

US-A-3,960,177 discloses a rotary valve according to the preamble of claim 1. Since the thickness of the air foils constantly increase towards their shaft, the form and the curvature of the concave and convex surfaces in the upstream side are different from each other, and the pressure applied to air foils are not in balance. As a consequence, a rather large residual load torque is generated.

## SUMMARY OF THE INVENTION

It is the essential object of the present invention to provide a rotary valve according to the preamble of claim 1 capable of greatly reducing load torque resulting from fluid flow.

In accomplishing this and other objects of the present invention, there is provided a rotary valve according to claim 1. A preferred embodiment of the invention is defined in claim 2.

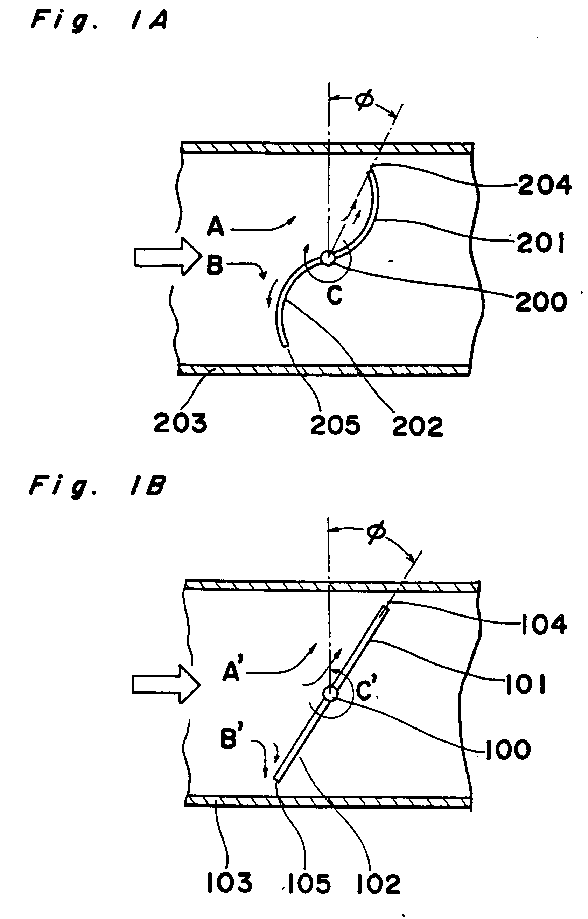

Referring to Fig. 1A which is a model view showing the valve of one of the aspects of the present invention and Fig. 1B which is a model view showing the conventional art, the operation of the aspect of the present invention is described below.

Referring to Fig. 1B showing the conventional valve, the valve comprising a valve shaft 100, a first airfoil 101, and a second airfoil 102 is accommodated in a flow passage 103. A nozzle between the end of the first airfoil 101 and the wall of the passage 103 and a nozzle between the end of the second airfoil 102 and the wall of the passage 103 are denoted as a first gap 104 and a second gap 105, respectively.

According to the conventional valve, torque is generated in the valve-closing direction, namely, in the direction as shown by the arrow C' of Fig. 1B. The reason is as follows: With the inclination of the airfoils 101 and 102, a flow is separated into two streams A' and B' in the upstream side of the valve, and the streams A' and B' are directed toward the first and second gaps 104 and 105, respectively. The stream A' is tapered downstream in the condition in which the airfoil 102 forms an acute angle with the wall of the passage 103. In the upstream side of the first airfoil 101, the velocity of the fluid flowing along the upper surface of the first airfoil 101 is high due to the smooth flow.

In the upstream side of the second airfoil 102, the direction of the stream B' is changed greatly in the vicinity of the end of the upper surface of the second airfoil 102, and then the stream B' progresses toward the second gap 105. Therefore, the velocity of the fluid flowing along the upper surface of the second airfoil 102 is small. From Bernoulli's theorem,

$$\rho U^2/2 + P = \text{constant} \tag{1},$$

where U is velocity of fluid; P is static pressure, and $\rho$ is density of fluid. Accordingly, in the upstream side of the valve, the static pressure P over the first airfoil 101 is low because the flow velocity U is high there while the static pressure P over the second airfoil 102 is high because the flow velocity is low. A lift is generated in the periphery of the wings of an airplane by the static pressure difference between the flow velocity above and below the wing. Similarly to the above, a moment in the valve-closing direction is generated about the shaft 100 by the difference of the static pressures of the airfoils, that is, the difference between the flow velocity above the upper surface of the first airfoil 101 and that above the upper surface of the second airfoil 102.

Referring to Fig. 1A, the valve according to one of the aspects of the present invention comprises a valve shaft 200, a concaved first airfoil 201 and a convexed second airfoil 202. A nozzle between the end of the first airfoil 201 and the wall of a flow passage 203 and a nozzle between the end of the second airfoil 202 and the wall of the passage 203 are denoted as a first gap 204 and a second gap 205, respectively.

The operation and advantage of the valve according to the aspects of the present invention is briefly described below from the standpoint of potential fluid dynamics.

With the inclination of the airfoils 201 and 202, the flow is separated into two streams A and B in the upstream side of the valve, and the streams A and B flow toward the first and second gaps 204 and 205, respectively. The stream A flows along the upper surface of the first airfoil 201 toward the first gap 204 in the condition in which the first airfoil 201 forms an obtuse angle with the wall of the passage 203. Therefore, the velocity of the stream A is low, i.e., the static pressure becomes maximum, thus approaching zero at the bottom thereof just like a cavity over which wind is blowing. The stream B flows along the upper surface of the second airfoil 202 toward the first gap 205 in the condition in which the second airfoil 202 forms an acute angle with the wall of the passage 203. The flow velocity of the stream B becomes maximum at the top point of the convexed second airfoil while the static pressure is minimum there. A moment in the valve-opening direction is generated by the increase of the static pressure along the upper surface of the first airfoil 201 and the fall of the static pressure along the upper surface of the second airfoil 202 as shown by the arrow C of Fig. 1A.

The feature of the valve according to the aspect of the present invention is that the difference in the static pressures along the upper surface of the first and second airfoils 201 and 202 is reduced by providing the valve having airfoils curved to satisfy the following condition.

1. The flow velocity is low along the upper surface of the first airfoil 201 in a wide range of valve disk angle.
2. The flow velocity is high along the upper surface of the second airfoil 202 in a wide range of valve disk angle. In this manner, torque is reducibly applied to the valve.

As understood from the above description, a concave or convex surface formed only on the first or second airfoil is capable of reducibly applying torque to the valve because a moment is generated in a valve-opening direction opposed to the direction of the moment generated according to the conventional valve.

## BRIEF DESCRIPTION OF THE DRAWINGS

Before the description of the present invention proceeds, it is to be noted that like parts are designated by like reference numerals throughout the accompanying drawings, in which:

Fig. 1A is a model view showing a valve according to one aspect of the present invention;
Fig. 1B is a model view showing a conventional valve;
Fig. 2 is a sectional view showing a valve according to an embodiment of the present invention;
Fig. 3 is a sectional view taken along the line A-A of Fig. 2;
Fig. 4 is a graph showing a torque curve;
Fig. 5A is a flow velocity vector diagram according to the conventional valve;
Fig. 5B is a pressure distribution diagram according to the conventional valve;
Fig. 6A is a flow velocity vector diagram according to one aspect of the present invention;
Fig. 6B is a pressure distribution diagram according to one aspect of the present invention;
Fig. 7 is a graph showing a pressure distribution over airfoils;
Fig. 8 is a sectional view showing a valve according to the present invention;
Fig. 9 is a sectional view showing the conventional valve;
Fig. 10 is a sectional view for describing a valve according to a modification of the present invention;
Fig. 11A is a perspective view showing the configuration of a valve according to the modification of the present invention;
Fig. 11B is a front view of the configuration of the valve, shown in Fig. 11A, viewed in A-direction;
Fig. 11C is a perspective view, showing the configuration of the valve of Fig. 11A, viewed in an angle different from the angle at which the valve of Fig. 11A is viewed;
Fig. 11D is a schematical view taken along the line B-B of Fig. 11A;
Fig. 11E is a schematical view taken along the line C-C of Fig. 11A;
Fig. 11F is a front view showing the valve of Fig. 11A;
Fig. 11G is a sectional view taken along the line B-B of Fig. 11F;
Fig. 11H is a sectional view taken along the line C-C of Fig. 11F;
Fig. 12 is a sectional view for describing the valve of Fig. 11;
Fig. 13A is a perspective view of the configuration of a valve similar to the valve according to the modification of the present invention;
Fig. 13B is a front view showing the configuration of the valve, of Fig. 13A, viewed in A-direction;
Fig. 13C is a schematical view taken along the line B-B of Fig. 13A; and
Fig. 13D is a schematical view taken along the line C-C of Fig. 13A.

## DETAILED DESCRIPTION OF THE EMBODIMENTS

Before description of the present invention proceeds, it is to be noted that like parts are designated by like reference numerals throughout the accomplishing drawings.

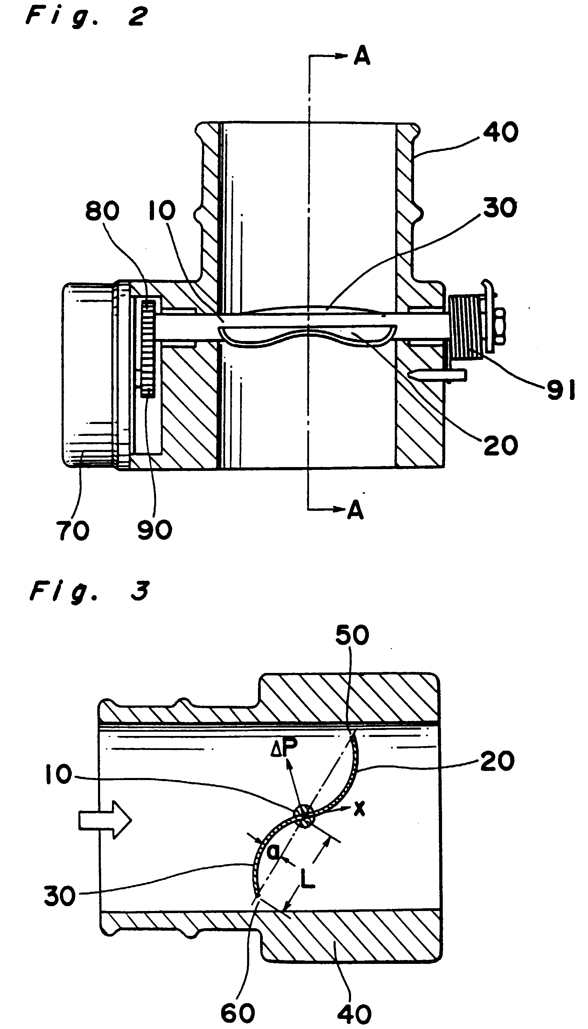

Referring to Figs. 2 and 3 showing an example of a throttle valve structure according to the present invention, the embodiment of the present invention is described below. Fig. 2 is a sectional view of a rotary valve, and Fig. 3 is a sectional view taken along the line A-A of Fig. 2. A valve comprising a shaft 10, a first airfoil 20, and a second airfoil 30 is mounted on the center of a flow passage 40 serving as an air intake cylinder. Reference numerals 50 and 60 shown in Fig. 3 denote a first gap and a second gap. Fluid flows in the direction shown by the arrow shown in the left end of Fig. 3.

Referring to Fig. 2, the shaft 10 is driven by a motor 70 through gears 80 and 90. A return spring 91 mounted on the right end of the shaft 10 urges the shaft 10 so that the return spring 91 closes the valve in emergency.

When the valve body comprising the first and second airfoils 20 and 30 are perpendicular to the passage 40, the valve is closed. With the clockwise rotation of the first and second airfoils 20 and 30, the valve is opened. This basic construction is similar to that of the conventional rotary valve.

According to this embodiment, torque to be applied to the rotating valve body by a fluid in opening the valve can be reduced because of an improved sectional configuration of the first and second airfoils 20 and 30. The first and second airfoils 20 and 30 are sine-curved. Therefore, the valve is approximately in the shape of an inverted S.

The mechanism of the valve capable of reducing torque has been numerically analyzed for a planar two-dimensional throttle valve model in comparison with the conventional valve. The opposing walls of the passage are parallel with each other. The condition is as follows on the assumption that the valve is mounted on an automobile.

1. An irreversible change is assumed in consideration of the compressibility of fluid (air).
2. Fluid keeps stagnating on the upstream side of the passage (inlet side).

$$\text{Pressure } P_{\infty} = 1.013 \times 10^{-6} \text{dyn/cm}^2 \text{ (1 atm)}$$

$$\text{Density } P_{\infty} = 1.225 \times 10^{-3} \text{ g/cm}^3$$

3. Fluid is forcibly inhaled at the rate of Q = 2500 l/min from the downstream side of the passage.
4. The valve is positioned $\ell_1$ = 50mm from the inlet disposed in the upstream side of the passage which is 200mm long.

The result of the numerical analysis made in the above condition is described below.

<1. Comparison of applied torque characteristic>

Fig. 4 shows the relationship between applied torque T and valve disk angle $\phi$ obtained by the analysis of static pressure around the valve performed on the valve comprising the first and second airfoils 20 and 30 according to the first embodiment. According to the first embodiment, as shown in Fig. 3, the a $= \frac{1}{4}$L, where a is the length corresponding to the wave crest of the sine curve, and L is the length corresponding to the length of the straight line between the shaft 10 and the end of the first and second airfoils 20 and 30. As described previously, Fig. 4 also shows the result obtained by analyzing applied torque characteristic of the conventional valve in the above-described conditions 1 through 4 described previously.

As shown by the graph of Fig. 4, the applied torque T of the conventional valve shown by the chain line is positive at all valve disk angles and has a peak value of T = 160gcm in the vicinity of angle $\phi$ = 35° while the embodiment, as shown by the solid line, is as follows:

(1). When $\phi$ < 45°, T < 0 (valve opening direction) and the negative maximum value of torque: Tmax = -20gcm.
(2). When $\phi$ > 45, T > 0 and the positive maximum value of torque: Tmax = 10gcm.

The above result indicates that the absolute value of torque applied to the valve of the embodiment is reduced to $\frac{1}{8}$ of the torque applied to the conventional valve and the rate of change of torque applied to the valve is greatly reduced even though valve disk angle thereof is varied in a great extent.

<2. Comparison of flow velocity vector>

In order to examine in detail the mechanism of the valve which reduces torque, the result of the analysis obtained by comparing the conventional valve and the valve of the embodiment with each other is described below.

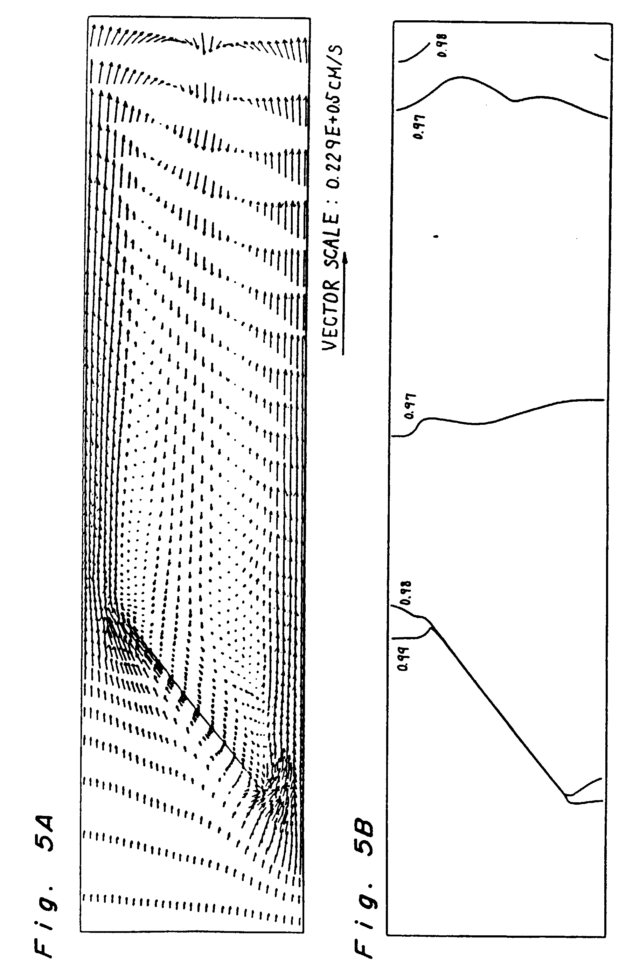

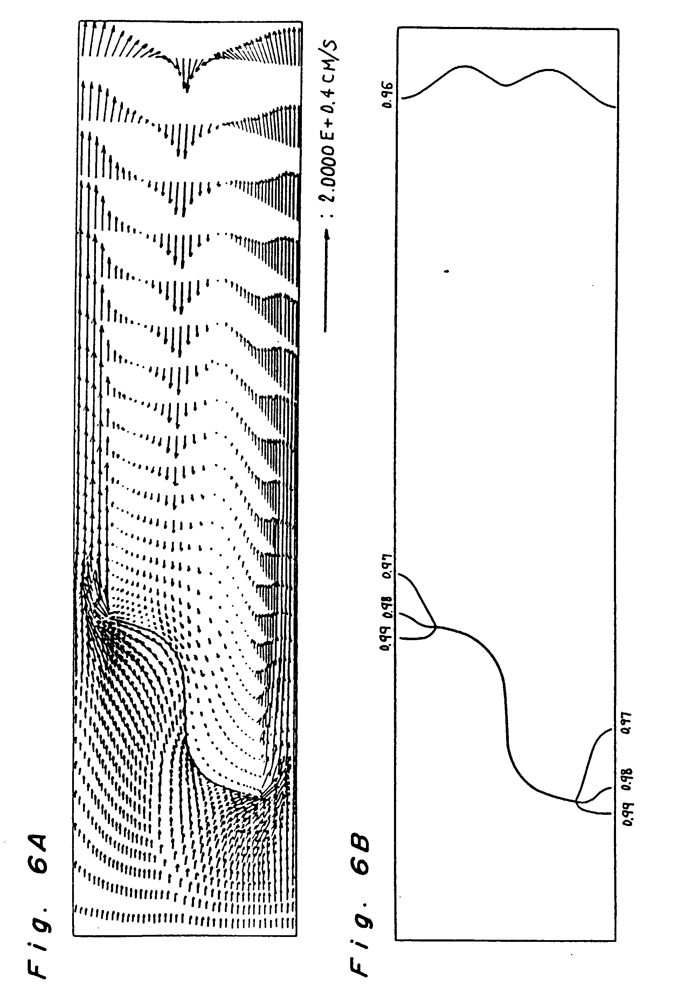

(1). Figs. 5A and 5B show respectively the velocity vector and pressure distribution, of the flow acting on the conventional valve, obtained at the valve disk angle of $\phi$ = 50°. With regard to the upstream side of the first airfoil 101 of Fig. 1B, the velocity vector of the flow over the upper surface of the first airfoil 101 and directed toward the first gap 104 is great because the flow passage is smooth. There is hardly any flow along the upper surface of the second airfoil 102 and directed toward the second gap 105, so that the velocity vector is quite small.
(2). Figs. 6A and 6B show respectively the velocity vector and pressure distribution, of the flow acting on the valve of the embodiment, obtained at the valve disk angle of $\phi$ = 50°. Concerning the flow on the upstream side of the first airfoil 201 of Fig. 1A, the velocity vector of the flow along the upper surface of the airfoil 201 and directed toward the first gap 204 is smaller than the conventional valve in the concaved bottom portion. Regarding the flow along the upper surface of the second airfoil 205 and directed toward the second gap 205, the velocity vector thereof is much greater than that on the conventional valve.

According to the result of the above (1) and (2), in the upstream side of the valve, the dynamic pressure applied to the first airfoil 101 of the embodiment is smaller than that applied to the first airfoil 201 of the conventional valve whereas the static pressure applied to the former is larger than that applied to the latter. In the upstream side of the valve, the dynamic pressure applied to the second airfoil 205 of the embodiment is larger than that applied to the second airfoil 205 of the conventional valve whereas the static pressure applied to the former is smaller than that applied to the latter. Consequently, the torque can be applied to the valve of the embodiment in a reduced amount. As understood from the velocity diagram shown in Figs. 5A and 6A, over the airfoils in the upstream side of the flow, velocity vectors are varied from each other depending on a place whereas in the downstream side of the flow, velocity vectors are not varied greatly from each other. This fact indicates that the main factor which decides torque depends mainly on the configuration of the airfoil in the upstream side.

As a result of the numerical calculation, the amount of fluid which flows into the first and second gaps are as shown in Table 1 when the valve disk angle $\phi$ is 50°.

Table 1

|  | first gap ($\ell$/sec) | second gap ($\ell$/sec) |
|---|---|---|
| conventional valve | $2.912 \times 10^4$ | $2.746 \times 10^4$ |
| invention (a=$\frac{1}{4}$ L) | $2.030 \times 10^4$ | $2.126 \times 10^4$ |

As apparent from Table 1, in the conventional valve, there is a big difference in the amount of fluid which flows into the first gap and the second gap. Additionally, the amount of fluid which flows into the first gap is great because the passage thereof is smooth. According to the present invention, opposite to the conventional valve, the flow rate of the second gap is larger than that of the first gap.

<3. Comparison of pressure distribution>

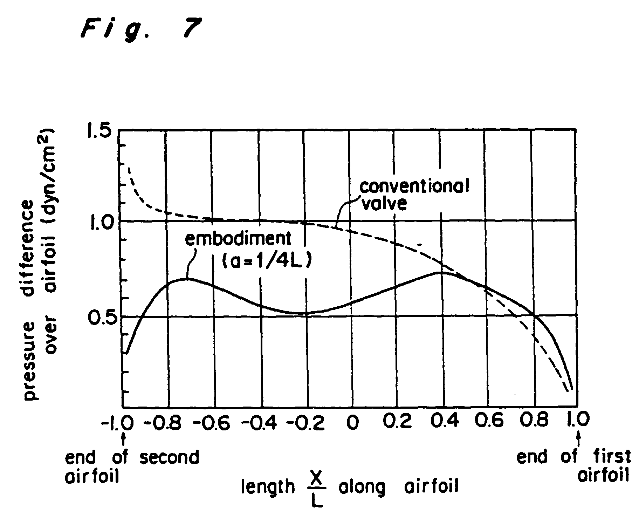

Fig. 7 shows the pressure difference over the airfoils between the valve of the present and the conventional valve. As shown in Fig. 3, x-coordinate is taken along the airfoil surface, the position of the shaft is zero in x-direction, and x-direction toward the first gap 50 is the positive side. The ordinate axis is the pressure difference $\Delta P$ between the upstream side and the downstream side of the airfoil. The abscissa axis is $\frac{x}{L}$ and non-dimensional where L is the length corresponding to the length of the straight line between the shaft 10 and the end of the first and second airfoils 20 and 30.

According to the conventional valve, the pressure difference $\Delta P$ is minimum in the end of the first airfoil and maximum in the end of the second airfoil as shown by the chain line of Fig. 7. As shown in the graph, an unbalanced pressure is applied to the conventional valve about the shaft thereof.

According to the valve of the embodiment, the pressure difference aP becomes maximum between the shaft (x = 0) and the end of the first airfoil and minimum between the shaft and the second airfoil. This phenomenon is caused by the fact that the fluid flows along the upper surface of the first airfoil which forms an obtuse angle with the wall of the passage. Therefore, the static pressure above the first airfoil is maximum. On the other hand, the fluid flows along the upper surface of the second airfoil which forms an acute angle with the wall of the passage. Therefore, the static pressure above the second airfoil is minimum as described previously.

The valve of the embodiment is in an inverted S configuration, however, this depends on a direction in which the valve is viewed. If the valve is viewed from the backside of the drawing sheet of Fig. 3, the configuration of the valve is S-shaped.

Second embodiment of the present invention will be described below. In addition to the torque characteristics of the valves described above, Fig. 4 shows by one-dot chain line the torque characteristic of the valve of the second embodiment in which the length (a) is one eighth of the length L of the airfoil. Similarly to the first embodiment, the torque T applied to the valve of the second embodiment is smaller than that of the conventional valve. Since the torque T becomes greater with the increase of the valve disk angle $\phi$, it is preferable to use the valve at a small angle.

The first and second airfoils 20 and 30 are embodied in the following configurations.

They are convexed smoothly along flow, i.e. they are smoothly sine curved as shown in Fig. 3.

They can be separated by a flat foil portion as shown in Fig. 8.

In addition, they can take the following configurations.

(I). Referring to Fig. 3, the airfoil is curved only in the flow direction and not in the direction perpendicular to the sheet showing Fig. 3.

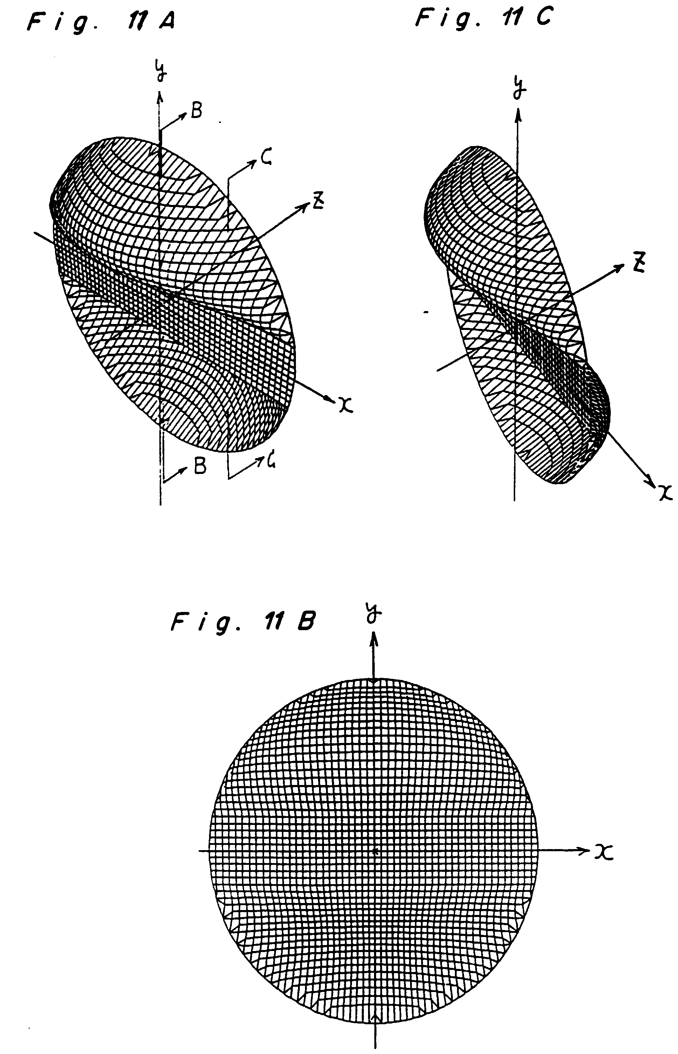

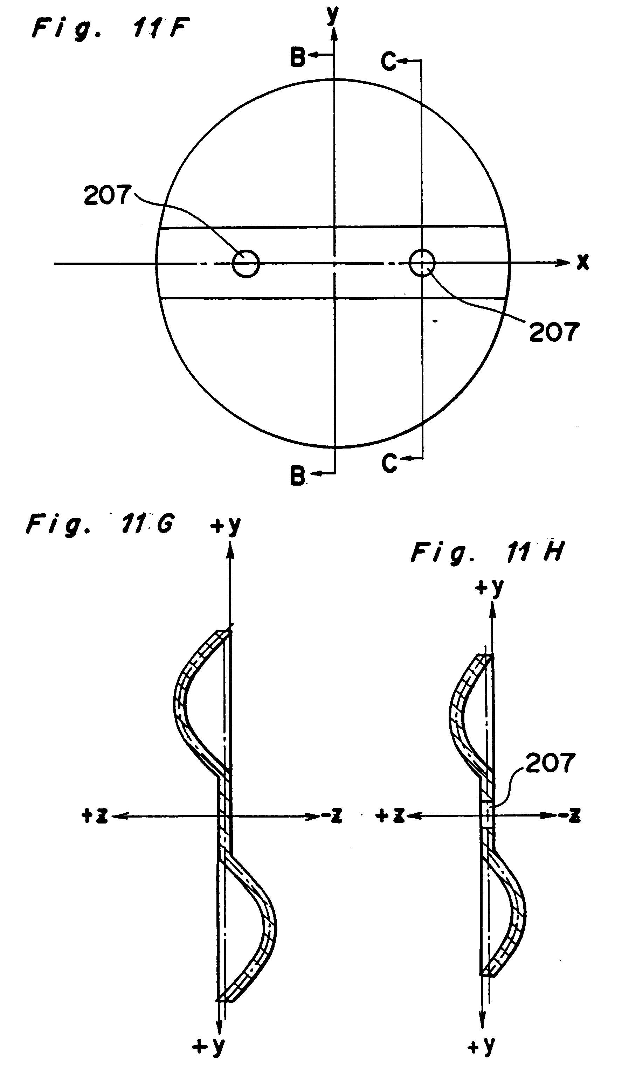

(II). Referring to Fig. 3, the airfoil is curved in the flow direction and curved like a spoon in the direction perpendicular to the sheet as shown in Fig. 11, i.e., it is deepest in the center thereof.

The effect of the present invention can be obtained by both configurations as described in the above items (I) and (II).

More specifically, in the case of the item (I), if the passage is quadrangular, the airfoil is also formed to be quadrangular, and the fluid flows only along the passage. Therefore, the assumption based on the numerical analysis of a two-dimensional fluid made with reference to Fig. 6 generally coincides with the actual flow direction.

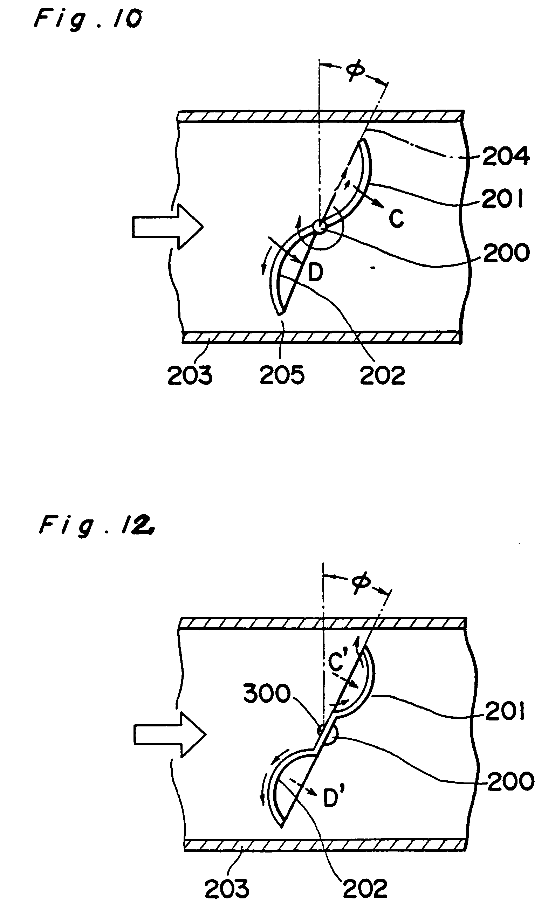

If the passage is circular, a flow occurs in the direction perpendicular to the sheet-showing Fig. 10, which is not considered by two-dimension analysis. As shown in Fig. 10, the fluid flows downstream between the end of the first airfoil 201 and the wall of the passage and between the end of the second airfoil 202 and the wall of the passage as shown by the arrows C and D. The flow perpendicular to the sheet is not a flow along the concaved and convexed surface of the airfoils. As described previously, the feature of the present invention is based on the theoretical ground that the airfoils have the configuration to satisfy the following:

(1). Fluid flows along the upper surface of the first airfoil which forms an obtuse angle with the wall of the passage.

(2). Fluid flows along the upper surface of the second airfoil which forms an acute angle with the wall of the passage.

If the passage is circular, the torque reduction effect of the airfoils is decreased due to the flow along the flat surface perpendicular to the sheet.

In the case of the above item (II), even if the passage is circular, the disadvantage of the above item (I) can be improved. Using a computer, the configuration of the valve described in the above item (II) is shown in Fig. 11. The valve is circular in section in which $z = 0$. Therefore, if the valve disk angle $\phi = 0$, the fluid is prevented from flowing between the end of the peripheral portion of the valve and the wall of the passage.

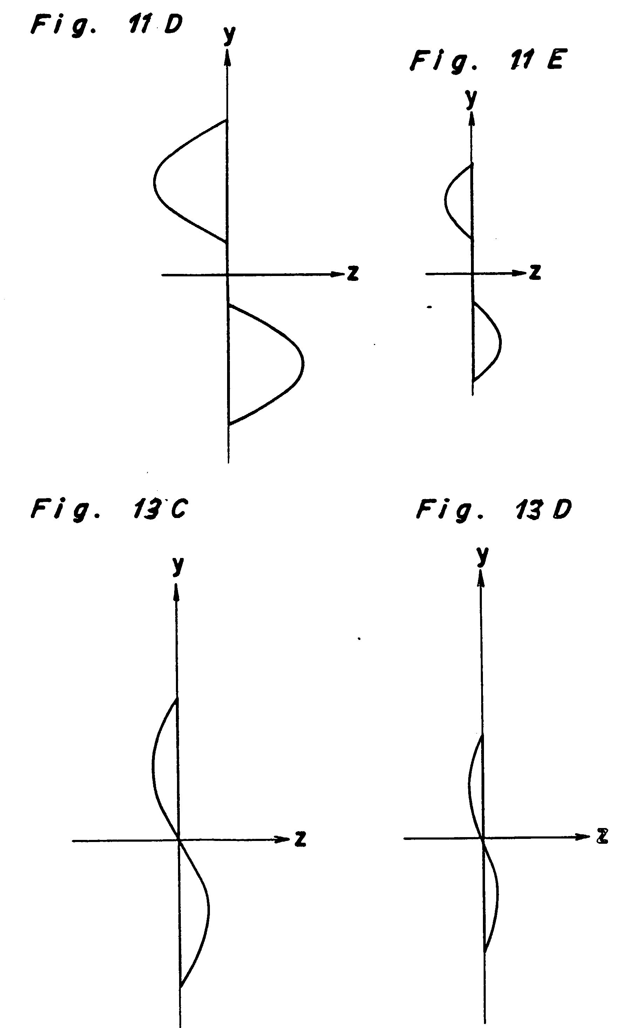

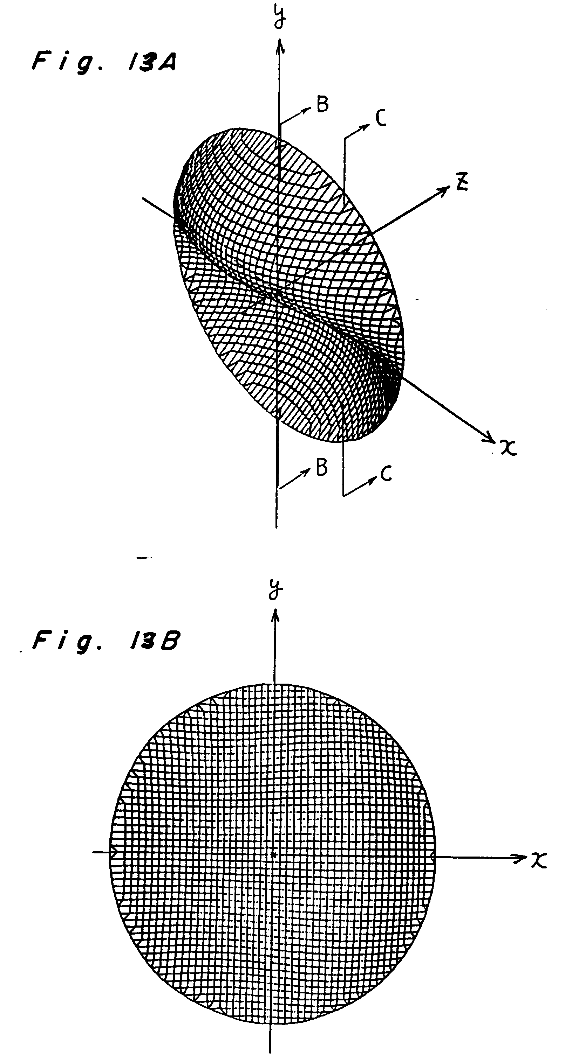

Referring to Fig. 12 which is a sectional view of the valve of Fig. 11, the fluid flows along the end portion of the first and second airfoils 201 and 202, and in C' and D' directions, but the speed of each flow is not as high as that of the flow which occurs in such a configuration which is curved only in the flow direction as described in the above item (I). In the flow direction (z-direction) of the fluid and the direction (X-direction) thereof perpendicular to the sheet showing Fig. 12, as described previously, the fluid flows both along the upper surface of the first airfoil which forms an obtuse angle with the wall of the passage and along the upper surface of the second airfoil which forms an acute angle with the wall of the passage. Therefore, the valve of Fig. 11 has the effect of the present invention. That is, the torque can be greatly reduced. The flat portion is provided in the center of the valve to fasten the first and second airfoils 201 and 202 to the shaft 200 with bolts through holes 207 in Fig. 11F. Fig. 13 shows a valve not having a flat portion in the center thereof. According to this configuration, the inclination of the airfoil with respect to Z-axis is varied depending on a position along x-axis. Therefore, it is difficult to fix the airfoils to the shaft.

In the above embodiments, both the first and second airfoils 20 and 30 are symmetrical with respect to the shaft. In addition, the present invention can be embodied by modifying the curved configuration of the first and second airfoils 20 and 30 and curvature thereof.

In addition to the modification of the configuration of the first and second airfoils 20 and 30, the configuration of the passage 40 can be altered to change the direction of the flow in the vicinity of the airfoils 20 and 30. Thus, torque can be applied to the valve in a reduced amount although the valve is not shown in the drawings.

The valve according to the present invention can be used not only as an air feeding throttle valve for use in an automobile engine, but also as a flow rate control butterfly valve for use in an air-conditioning plant and a chemical plant, a vacuum pressure control valve for use in a vacuum equipment.

As apparent from the foregoing description, the airfoil of the valve according to the present invention is capable of reducing torque.

More specifically, as described previously, the airfoil has the following configurations:

1. The first airfoil is concaved.

2. The second airfoil is convexed.

Static pressure is applied to the upper and lower airfoils in a balanced condition by adopting either the configuration of the above item 1 or 2 or both items 1 and 2. Thus, torque is reducibly applied to the valve.

Consequently, a fine adjustment of the output of an engine can be accomplished by the valve of the present invention.

Further, according to the present invention, a larger diameter valve than the conventional one can be mounted on an equipment because of the following reason. Generally, when the engine output is maximum, preferably, a throttle valve reduces the ratio of resistance to inhaled air as greatly as possible. Therefore, the use of a large diameter valve is desired. According to the conventional throttle valve, torque is applied to the valve in proportion to the cube of a valve diameter. Therefore, there is a limitation to the increase of the inner diameter of a flow passage. A control system can be constructed with a small electric actuator comprising the valve of the present invention.

In view of the fact that the butterfly valve is used in various fields as a fluid control appliance, the use of the valve of present invention enables an electronic control of the flow rate.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims.

**Claims**

1. Rotary valve comprising:

   a valve body including a first and second air foil (20, 30);
   a first air foil (20) being concave with a concave side facing in the upstream valve direction and moving downstream when the valve is opened;
   a second air foil (30) being convex with a convex side facing in the upstream valve direction and moving upstream when the valve is opened;
   a flow passage (40) having a rotatable shaft (10) extending thereacross on which said valve body is mounted with the first and second air foils (20, 30) on opposite sides of said shaft (10), the first and the second air foils (20, 30) being symmetrical with respect to the shaft (10),

   characterized in that
   said concave side of said first air foil (20) and said convex side of said second air foil (30) have a sine-curved shape and in that both air foils (20, 30) have the same constant thickness, whereby the thickness is smaller than the cross section of the shaft (10).

2. Rotary valve according to claim 1:
   characterized in that the first air foil (20) and the second air foil (30) being separated by a flat foil portion to fasten the first and the second air foils (20, 30) to the shaft (10).

**Patentansprüche**

1. Drehklappenventil, umfassend:

   einen Ventilkörper, der einen ersten und zweiten umströmten Körper (20, 30) umfaßt;
   einen konkaven, ersten umströmten Körper (20) mit einer konkaven Seite, die in die stromaufwärts liegende Ventilrichtung zeigt und sich stromabwärts bewegt, wenn das Ventil geöffnet wird;
   einen konvexen, zweiten umströmten Körper (30) mit einer konvexen Seite, die in die stromaufwärts liegende Ventilrichtung zeigt und sich stromaufwärts bewegt, wenn das Ventil geöffnet wird;
   einen Strömungskanal (40), der eine sich über diesen erstreckende drehbare Welle (10) besitzt, an der der Ventilkörper mit dem ersten und zweiten umströmten Körper (20, 30) auf gegenüberliegenden Seiten der Welle (10) befestigt ist, wobei der erste und der zweite umströmte Körper (20, 30) in Bezug auf die Welle (10) symmetrisch sind,

   gekennzeichnet dadurch, daß
   die konkave Seite des ersten umströmten Körpers (20) und die konvexe Seite des zweiten umströmten Körpers (30) eine Sinuskurvenform haben, und daß beide umströmten Körper (20, 30) die gleiche konstante Dicke haben, wobei die Dicke kleiner ist als der Querschnitt der Welle (10).

2. Drehklappenventil gemäß Anspruch 1,
   gekennzeichnet dadurch, daß der erste umströmte Körper (20) und der zweite umströmte Körper (30) durch ein flaches Körperteil getrennt sind, um den ersten und den zweiten umströmten Körper (20, 30) an der Welle (10) zu befestigen.

**Revendications**

1. Soupape rotative comprenant :

un corps de soupape comportant un premier et un second clinquant pneumatique (20, 30);
un premier clinquant pneumatique (20) étant concave avec un côté concave dirigé dans le sens amont de la soupape et se déplaçant vers l'aval lorsque la soupape est ouverte;
un second clinquant pneumatique (30) étant convexe avec un côté convexe dirigé dans la direction amont de la soupape et se déplaçant vers l'amont lorsque la soupape est ouverte;
un passage d'écoulement (40) ayant un arbre rotatif (10) s'étendant à travers lui sur lequel ledit corps de soupape est monté avec les premier et second clinquants pneumatiques (20, 30) sur les côtés opposés dudit arbre (10), les premier et second clinquants pneumatiques (20, 30) étant symétriques par rapport à l'arbre (10);

caractérisée en ce que :
ledit côté concave dudit premier clinquant pneumatique (20) et ledit côté convexe dudit second clinquant pneumatique (30) ont une forme incurvée de manière sinusoïdale, et en ce que les deux clinquants pneumatiques (20, 30) ont la même épaisseur constante, grâce à quoi l'épaisseur est inférieure à la section transversale de l'arbre (10).

2. Soupape rotative selon la revendication 1,
caractérisée en ce que le premier clinquant pneumatique (20) et le second clinquant pneumatique (30) sont séparés par une partie de clinquant plate de manière a assujettir les premier et second clinquants pneumatiques (20, 30) à l'arbre (10).

Fig. 1A

Fig. 1B

Fig. 2

Fig. 3

## *Fig. 4*

Fig. 5A

VECTOR SCALE : 0.229E+05 CM/S

Fig. 5B

0.99   0.98        0.97                    0.97        0.98

Fig. 6A

: 2.0000 E+0.4 CM/S

Fig. 6B

*Fig. 7*

Fig. 8

Fig. 9

PRIOR ART

Fig. 10

Fig. 12

Fig. 11 A

Fig. 11 C

Fig. 11 B

Fig. 11 F

207

207

Fig. 11 G

Fig. 11 H

207

Fig. 11 D

Fig. 11 E

Fig. 13 C

Fig. 13 D

*Fig. 13A*

*Fig. 13B*